# EUROPÄISCHE PATENTSCHRIFT

(11) **EP 2 517 956 B1**
(45) Veröffentlichungstag und Bekanntmachung des Hinweises auf die Patenterteilung: **21.12.2016**
(21) Anmeldenummer: 12165447.9
(22) Anmeldetag: 25.04.2012
(51) Int. Cl.: B64D 9/00, B64C 1/20, A62C 3/08

(54) **Frachtdeck für einen Frachtraum eines Flugzeugs sowie Verfahren zum Überwachen der Temperatur eines auf einem Frachtraumboden angeordneten Containers, einer Palette oder eines dergleichen Unit Load Device (ULD)**
Freight deck for a freight area of an aircraft and method for monitoring the temperature of a container, pallet or similar Unit Load Device (ULD) on the freight room floor
Plafond de soute pour une soute d'avion ainsi que le procédé de surveillance de la température d'un conteneur, d'une palette ou d'une unité de chargement analogue placés au sol de la soute

(30) Priorität: 27.04.2011 DE 102011002276
(43) Veröffentlichungstag der Anmeldung: 31.10.2012
(73) Patentinhaber: Telair International GmbH, 83714 Miesbach (DE)
(72) Erfinder: Holzner, Richard, 83071 Stephanskirchen (DE); Kieser, Benedikt, 83734 Hausham (DE); Schmidseder, Martin, 83098 Brannenburg (DE); Huber, Thomas, 83727 Schliersee (DE)
(74) Vertreter: Bohnenberger, Johannes

(56) Entgegenhaltungen:
- EP-A1- 1 346 911
- EP-A2- 1 695 908
- EP-A2- 2 444 320
- DE-A1-102007 039 895
- US-A1- 2007 044 979

## Beschreibung

Die Erfindung betrifft ein Frachtdeck für einen Frachtraum eines Flugzeugs gemäß Patentanspruch 1 und ein Verfahren zum Überwachen der Temperatur eines auf einem Frachtraumboden angeordneten Containers, einer Palette oder eines dergleichen Unit Load Device gemäß Patentanspruch 7.

Ein großer Teil der Fracht weltweit wird heutzutage per Flugzeug transportiert. Eine große Gefahr beim Transport von Fracht in Flugzeugen ist, dass die Fracht sich entzündet und somit ein Feuer bzw. ein Brand ausbricht.

Alle Flugzeuge haben zwar ein Rauchmeldesystem für den Frachtraum, aber wenn das Rauchmeldesystem anspricht, ist ein Feuer bzw. ein Brand bereits ausgebrochen. Flugzeuge verfügen üblicherweise über kein richtiges Löschsystem, sondern es wird versucht, das Feuer mehr oder weniger zu ersticken bzw. durch Luftabschottung soweit zu reduzieren, bis man wieder gelandet ist.

Ein Problem ist somit, dass ein bereits ausgebrochenes Feuer bzw. ein bereits ausgebrochener Brand während des Flugs ein großes und unkalkulierbares Risiko für das Flugzeug, das Flugzeugpersonal, Flugzeugpassagiere und andere Fracht im Flugzeug führt und in der Vergangenheit sogar zu Abstürzen von Flugzeugen geführt hat.

Eine Vorrichtung der hier angesprochenen Art ist auch aus der US 2007/044979 A1 bekannt.

Der Erfindung liegt die Aufgabe zu Grunde, ein Frachtdeck aufzuzeigen, bei dem die Gefahr eines bevorstehenden Ausbruchs eines Feuers bzw. eines Brands erkannt werden kann, bevor ein Feuer bzw. ein Brand ausgebrochen ist.

Diese Aufgabe wird durch ein Frachtdeck für einen Frachtraum eines Flugzeugs gemäß Patentanspruch 1 und ein Verfahren zum Überwachen der Temperatur eines auf einem Frachtraumboden angeordneten Containers, einer Palette oder eines dergleichen Unit Load Device gemäß Patentanspruch 7 gelöst.

Insbesondere wird die Aufgabe durch ein Frachtdeck für einen Frachtraum eines Flugzeugs gelöst, das mindestens eine Temperaturmessvorrichtung zum berührungslosen Messen der Temperatur mindestens eines Containers, einer Palette oder eines dergleichen Unit Load Device (ULD) sowie mindestens eine Rollenantriebseinheit (PDU) zum Bewegen der ULD umfasst, wobei die Temperaturmessvorrichtung derart in einem Boden des Frachtdecks angeordnet ist, dass die Temperatur einer Unterseite der ULD mittels der Temperaturmessvorrichtung messbar ist, wobei die Temperaturmessvorrichtung zum Messen der Temperatur einer im Wesentlichen schwarzen Unterseite der ULD angepasst ist, wobei die Temperaturmessvorrichtung auf einen Emissionsgrad des Materials der Unterseite der ULD kalibrierbar und/oder einstellbar ist, und wobei die Temperaturmessvorrichtung in der Rollenantriebseinheit angeordnet ist.

Ein wesentlicher Punkt der Erfindung besteht darin, dass mittels der Temperaturmessvorrichtung die Temperatur der ULD gemessen wird, so dass eine Temperatur bzw. Temperaturerhöhung, die auf eine Gefahr eines bevorstehenden Brandes bzw. Feuers hindeutet, erfasst werden kann. Vorteilhaft hieran ist, dass die Entstehung von großer Hitze, die einem Brand bzw. Feuer im Regelfall vorausgeht, erfasst werden kann. Hierdurch können entsprechende Gegenmaßnahmen bei einer zu hohen Temperatur der ULD eingeleitet werden, so dass ein Brand bzw. ein Feuer verhindert werden kann. Auch wenn ein Ausbrechen des Brands bzw. des Feuers nicht mehr verhindert werden kann, so können doch Gegen- und/oder Notfallmaßnahmen gegen einen Brand bzw. ein Feuer deutlich früher eingeleitet werden, noch bevor ein Rauchmeldesystem Rauch detektiert und einen Alarm auslöst. Hierdurch steigt die Sicherheit. Darüber hinaus kann durch die Temperaturmessvorrichtung ein bereits existierender Brand bzw. ein existierendes Feuer ebenfalls erkannt werden.

Die Temperaturmessvorrichtung kann einen Infrarotsensor umfassen. Hierdurch sinken die Kosten. Zudem sinkt der technische Aufwand, da Infrarotsensoren einfach installiert werden können und einen geringen Wartungsaufwand aufweisen.

In einer Ausführungsform umfasst die Temperaturmessvorrichtung eine Infrarotkamera. Ein Vorteil hiervon ist, dass die Kosten sinken, da Infrarotkameras kostengünstig sind. Zudem weist eine Infrarotkamera eine höhere Temperaturgenauigkeit bei unterschiedlichen klimatischen Bedingungen auf. Darüber hinaus kann durch eine Infrarotkamera ein Temperaturverlaufsprofil der ULD erfasst werden. Hierdurch lässt sich das Bevorstehen des Ausbrechens eines Brands bzw. eines Feuers noch genauer detektieren.

Die Temperaturmessvorrichtung ist derart in einem Boden des Frachtdecks angeordnet, dass die Temperatur einer Unterseite der ULD mittels der Temperaturmessvorrichtung messbar ist. Durch diese Anordnung werden störende Einflüsse der Umwelt auf die Temperaturmessvorrichtung deutlich reduziert. Hierdurch steigt die Genauigkeit und Zuverlässigkeit der Temperaturmessung. Zudem ist die Temperaturmessvorrichtung vor Beschädigungen, insbesondere durch Bewegungen der ULDs, gut geschützt. Darüber hinaus wird die Temperaturerfassung insofern erleichtert, als dass die Unterseite jeder ULD gleichförmig ist und somit die räumliche Verteilung der Wärmestrahlung der Unterseite von ULDs im Wesentlichen gleich ist.

Die Temperaturmessvorrichtung ist zum Messen der Temperatur einer im Wesentlichen schwarzen Unterseite der ULD angepasst. Vorteilhaft hieran ist, dass die Temperaturmessung durch die Temperaturmessvorrichtung noch präziser wird, da eine schwarze Unterseite im Wesentlichen einen Emissionsgrad von 1 besitzt.

In einer weiteren Ausführungsform ist die Temperaturmessvorrichtung mit einem Datenbus, insbesondere einem CAN-Bus, des Frachtdecks, insbesondere des Frachtraumbodens, zum Übertragen von Wärmemesssignalen verbindbar. Ein Vorteil hiervon ist, dass Wärmemesssignale, die durch Messung der Temperatur der ULD gewonnen werden, technisch einfach an andere Vorrichtungen übertragen werden können.

Dadurch wird die Überwachung von mehreren Containern in einem Frachtdeck deutlich erleichtert.

Die Temperaturmessvorrichtung kann mit einer Betriebsleitzentrale verbindbar sein. Ein Vorteil hiervon ist, dass in der Betriebsleitzentrale die Temperaturmessungen vieler verschiedener Container zusammenführbar ist, wodurch das Bevorstehen eines Ausbruchs eines Brands bzw. eines Feuers oder die Existenz eines bereits bestehenden Feuers bzw. eines Brands in dem Frachtdeck noch leichter erkannt werden kann. Darüber hinaus kann in der Betriebsleitzentrale eingeschätzt werden, wie weit sich ein existierendes Feuer bzw. ein existierender Brand bereits ausgebreitet hat.

Die Temperaturmessvorrichtung ist auf einen Emissionsgrad des Materials der Unterseite der ULD, kalibrierbar und/oder einstellbar. Vorteilhaft hieran ist, dass die Genauigkeit der Temperaturmessung erhöht werden kann, indem der Emissionsgrad von unterschiedlichen Materialien der ULD berücksichtigt wird. Somit kann auch bei ULDs mit unterschiedlichen Materialien die Genauigkeit der Temperaturmessung im Wesentlichen konstant gehalten werden.

Die Temperaturmessvorrichtung ist in der Rollenantriebseinheit angeordnet. Vorteilhaft hieran ist, dass der Aufwand der Installation der Temperaturmessvorrichtungen verringert wird, da bei Installation der Rollenantriebseinheit die Temperaturmessvorrichtung mit installiert wird. Zudem wird die Anbindung der Temperaturmessvorrichtung an einen Datenbus deutlich erleichtert, da die Rollenantriebseinheit üblicherweise bereits mit einem Datenbus verbunden ist. Somit werden im Wesentlichen keine zusätzlichen Verkabelungen benötigt, um die Temperaturmessvorrichtung an einen Datenbus anzuschließen. Die PDUs weist im Regelfall zudem einen genau definierten Abstand zur ULD auf, wodurch die Genauigkeit der Temperaturmessung erhöht werden kann.

Die Temperaturmessvorrichtung kann derart ausgebildet sein, dass die An- oder Abwesenheit einer ULD zu Steuerzwecken durch ein Ausgangssignal der Temperaturmessvorrichtung feststellbar ist. Vorteilhaft hieran ist, dass mit einer einzigen Vorrichtung sowohl die Temperatur der ULD erfasst werden kann, als auch die An- bzw. Abwesenheit einer ULD detektiert werden kann. Hierdurch sinken die Kosten und der technische Aufwand, da nur eine Vorrichtung an Stelle von zwei getrennten Vorrichtungen zur Temperaturmessung bzw. zur Feststellung der An- bzw. Abwesenheit der ULD benötigt wird. Hierdurch sinken die Kosten und der technische Aufwand.

Die Aufgabe wird auch durch ein Verfahren zum Überwachen der Temperatur eines auf einem Frachtraumboden angeordneten Containers, einer Palette oder eines dergleichen Unit Load Device (ULD) gelöst, wobei die Temperatur einer Unterseite der ULD, vorzugsweise die Temperatur einer schwarzen Unterseite der ULD, mittels einer Temperaturmessvorrichtung in einer Rollenantriebseinheit zum Bewegen der ULD des Frachtraumbodens berührungslos gemessen wird, wobei vor dem Messen der Temperatur auf eine Unterseite der ULD eine Oberflächenbeschichtung zur Erhöhung des Emissionsgrads aufgebracht wird,
und wobei vor der Temperaturmessung die Temperaturmessvorrichtung auf einen Emissionsgrad des Materials der Unterseite der ULD kalibriert und/oder eingestellt wird. Durch das Messen der Temperatur der ULD können entsprechende Gegenmaßnahmen bei einer zu hohen Temperatur der ULD eingeleitet werden, so dass ein Brand bzw. ein Feuer verhindert werden kann. Auch wenn ein Ausbrechen des Brands bzw. des Feuers nicht mehr verhindert werden kann, so können doch Gegenmaßnahmen gegen einen Brand bzw. ein Feuer deutlich früher eingeleitet werden. Hierdurch steigt die Sicherheit. Darüber hinaus kann mittels dieses Verfahrens ein bereits existierender Brand bzw. ein existierendes Feuer ebenfalls erkannt werden. Das Messen der Temperatur einer schwarzen Unterseite der ULD erhöht die Genauigkeit der Temperaturmessung, da eine solche Unterseite im Wesentlichen einen Emissionsgrad von 1 hat.

Die Temperatur der ULD kann mittels eines Infrarotsensors und/oder einer Infrarotkamera gemessen werden. Hierdurch sinken die Kosten. Zudem sinkt der technische Aufwand, da Infrarotsensoren einfach installiert werden können und einen geringen Wartungsaufwand aufweisen. Beim Messen der Temperatur mittels Infrarotkamera, sinken die Kosten, da Infrarotkameras kostengünstig sind. Zudem weist eine Infrarotkamera eine höhere Temperaturgenauigkeit bei unterschiedlichen klimatischen Bedingungen auf. Darüber hinaus kann durch das Messen mittels einer Infrarotkamera ein Temperaturverlaufsprofil der ULD erfasst werden. Hierdurch lässt sich das Bevorstehen des Ausbrechens eines Brands bzw. eines Feuers noch genauer detektieren.

Eine Oberflächenbeschichtung zur Erhöhung des Emissionsgrads wird vor dem Messen der Temperatur auf eine Unterseite der ULD aufgebracht. Vorteilhaft hieran ist, dass die Genauigkeit der Temperaturmessung durch die Temperaturmessvorrichtung deutlich erhöht wird. Zudem kann dadurch unter Umständen das Kalibrieren und/oder Einstellen der Temperaturmessvorrichtung auf verschiedene Emissionsgrade der Materialen der ULD entfallen.

In einer Ausführungsform umfasst das Verfahren ferner folgende Schritte: Vergleichen der gemessenen Temperatur der ULD mit einem voreingestellten Grenzwert, und Auslösen eines Alarms, wenn die gemessene Temperatur den voreingestellten Grenzwert übersteigt. Ein Vorteil hiervon ist, dass eine manuelle Überwachung der Temperatur der ULD weitgehend entfallen kann. Zudem kann durch den Alarm beispielsweise ein automatisches Löschsystem aktiviert werden, das den bevorstehenden Brand bzw. das bevorstehende Feuer im Keim erstickt oder zumindest klein hält. Darüber hinaus können durch den Alarm das Flugpersonal auf den Brand bzw. das Feuer aufmerksam gemacht werden. Auch Rettungskräfte am Boden können durch den Alarm alarmiert werden, dass in dem Flugzeug ein Feuer ausgebrochen ist bzw. bald ausbricht und das Flugzeug daher eine Notlandung durchführen wird.

Vor der Temperaturmessung wird die Temperaturmessvorrichtung auf einen Emissionsgrad des Materials der Unterseite der ULD kalibriert und/oder eingestellt. Vorteilhaft hieran ist, dass die Genauigkeit der Temperaturmessung erhöht werden kann, indem der Emissionsgrad von unterschiedlichen Materialien der ULD berücksichtigt wird. Somit kann auch bei ULDs mit unterschiedlichen Materialien die Genauigkeit der Temperaturmessung im Wesentlichen konstant gehalten werden.

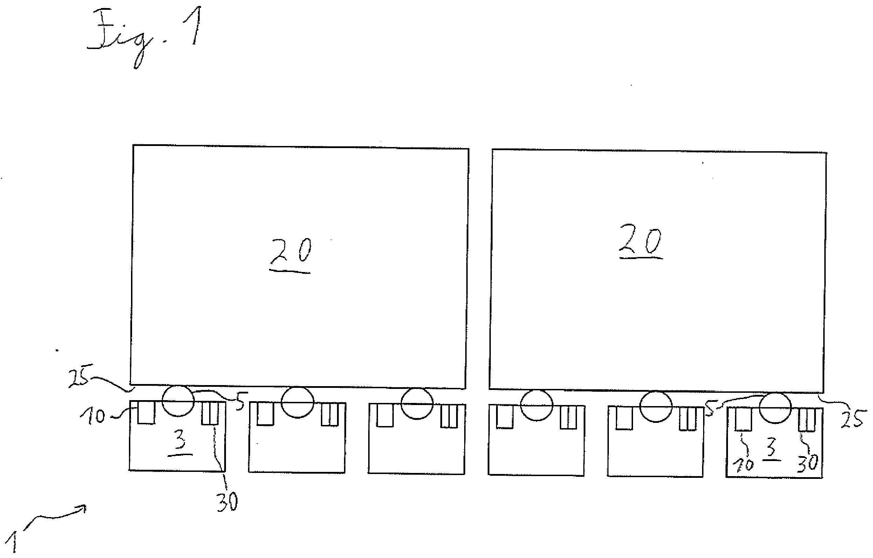

Bevorzugte Ausführungsformen ergeben sich aus den Unteransprüchen. Nachfolgend wird die Erfindung anhand einer Zeichnung eines Ausführungsbeispiels näher erläutert. Hierbei zeigt
- Fig. 1: eine schematische Seitenansicht einer Ausführungsform eines erfindungsgemäßen Frachtdecks mit Rollenantriebseinheiten und Containern.

Bei der nachfolgenden Beschreibung werden für gleiche und gleich wirkende Teile dieselben Bezugsziffern verwendet.

Fig. 1 zeigt eine schematische Seitenansicht einer Ausführungsform des erfindungsgemäßen Frachtdecks 1. Das Frachtdeck 1 umfasst mehrere Rollenantriebseinheiten 3, die einen (Teil eines) Frachtraumboden des Frachtdecks 1 bilden. Das Frachtdeck 1 kann das obere und/oder das untere Deck eines Flugzeugs bilden.

Die Rollenantriebseinheit 3 treibt Rollen 5 an, die die Container, Paletten oder dergleichen ULD (Unit Load Device) 20 bewegen können. In Fig. 1 steht jede der ULDs 20 in Kontakt mit jeweils drei Rollen 5 mit jeweils einer Rollenantriebseinheit (PDU, Power Drive Unit) 3. Vorstellbar ist jedoch auch, dass die Rollenantriebseinheiten 3 anders angeordnet sind bzw. die ULD 20 in Kontakt mit mehr oder weniger Rollenantriebseinheiten steht.

Die Rollenantriebseinheiten 3 sind unterhalb der ULDs 20 angeordnet und bilden einen Teil des Frachtraumbodens. In Fig. 1 umfasst jede der Rollenantriebseinheiten 3 eine Temperaturmessvorrichtung 10. Vorstellbar ist auch, dass nur ein Teil der Rollenantriebseinheiten 3 jeweils eine Temperaturmessvorrichtung 10 aufweist.

Die Temperaturmessvorrichtung 10 ist derart in dem Frachtraumboden angeordnet, dass die Temperatur einer Unterseite 25 der jeweiligen ULD 20 berührungslos erfasst werden kann.

Die Temperaturmessvorrichtung 10 kann eine Infrarotkamera und/oder ein Infrarotsensor sein. Andere Arten der berührungslosen Messung der Temperatur des Containers sind vorstellbar.

In Fig. 1 misst die Temperaturmessvorrichtung 10 die Temperatur der Unterseite 25 der ULD 20. Vorstellbar ist jedoch auch, dass die Temperaturmessvorrichtung 10 nicht in der Rollenantriebseinheit 3 angeordnet ist, sondern an anderer Stelle in dem Frachtdeck. Insbesondere ist vorstellbar, dass die Temperaturmessvorrichtung die Temperatur einer anderen Seite der ULD misst, beispielsweise die Temperatur der Oberseite oder einer Seitenwand der ULD 20. Hierzu kann die Temperaturmessvorrichtung 10 beispielsweise in der Decke des Frachtdecks und/oder in Seitenwänden des Frachtdecks angeordnet sein.

Die Temperaturmessvorrichtung 10 misst die Temperatur der ULD 20. Dies kann kontinuierlich oder in Zeitintervallen geschehen. Die gemessenen Temperaturmesssignale können an andere Vorrichtungen weitergeleitet werden. Hierfür ist die Temperaturmessvorrichtung 10 mit einem CAN-Bus verbunden. Da die Rollenantriebseinheiten 3 im Regelfall ebenfalls mit dem CAN-Bus verbunden sind, ist es sehr vorteilhaft, die Temperaturmessvorrichtung 10 in der Rollenantriebseinheit 3 anzuordnen. Über den CAN-Bus können die Temperaturmesssignale der Temperaturmessvorrichtung 10 über eine GSM/GPS-Schnittstelle weiter übertragen werden. Andere Arten der Datenverbindung der Temperaturmessvorrichtung 10 mit anderen Vorrichtungen sind vorstellbar.

Über den CAN-Bus oder andere Datenverbindungen ist die Temperaturmessvorrichtung 10 mit einer Betriebsleitzentrale (nicht gezeigt) bzw. Operations Control Center (OPCON) (nicht gezeigt) verbunden. In der Betriebsleitzentrale laufen die Temperaturmesssignale von mehreren Temperaturmessvorrichtungen 10 zusammen. In der Betriebsleitzentrale oder in den Temperaturmessvorrichtungen 10 selbst wird die gemessene Temperatur mit einem voreingestellten Grenzwert, beispielsweise 150 °C, verglichen. Wenn die gemessene Temperatur den voreingestellten Grenzwert übersteigt, wird ein Alarm ausgelöst. Durch den Alarm können Gegenmaßnahmen ergriffen werden, um das Ausbrechen eines Brandes bzw. eines Feuers zu verhindern bzw. das Feuer bzw. den Brand zu löschen. Beispielsweise können durch den Alarm Löschgase in das Frachtdeck eingeleitet werden oder bestimmte Abschnitte des Frachtdecks können durch Feuerschutzwände abgetrennt werden. Durch den Alarm können die Piloten auf die kritische Lage in dem Frachtdeck aufmerksam gemacht werden und/oder Rettungskräfte am Boden können alarmiert werden. Der voreingestellte Grenzwert kann für verschieden Arten von ULD 20 bzw. verschiedene ULDs 20 auf verschiedene Werte eingestellt werden.

Da verschiedene Materialien verschiedene Emissionsgrade aufweisen, ist die Temperaturmessvorrichtung 10 auf verschiedene Emissionsgrade kalibrierbar und/oder einstellbar. Hierdurch wird sichergestellt, dass trotz unterschiedlicher Materialien die Genauigkeit der Temperaturmessung durch die Temperaturmessvorrichtung 10 im Wesentlichen konstant bleibt.

Unter Genauigkeit der Temperaturmessung ist zu verstehen, wie gut die durch die Temperaturmessvorrichtung 10 gemessene Temperatur mit der wirklichen Temperatur der ULD 20 bzw. einer Außenseite der ULD 20 übereinstimmt. Der Emissionsgrad gibt an, wie viel Strahlung ein Körper abgibt im Verhältnis zu einem idealen Wärmestrahler in Form eines schwarzen Körpers.

ULDs 20 bzw. die Unterseiten 25 von ULDs 20 bestehen üblicherweise aus Aluminium, das einen geringen Emissionsgrad aufweist. Als besonders vorteilhaft hat es sich erwiesen, die Unterseite 25 der ULD 20 mit einer Oberflächenbeschichtung zu versehen, um den Emissionsgrad zu erhöhen bzw. zu standardisieren. Beispielsweise kann die Unterseite 25 der ULD 20 durch Eloxierung schwarz gefärbt werden. Durch die Schwarzfärbung hat die Unterseite 25 der ULD 20 einen Emissionsgrad nahe 1. Hierdurch wird die Genauigkeit der Temperaturmessung deutlich erhöht. Eine Kalibrierung und/oder Einstellung der Temperaturmessvorrichtung 10 auf verschiedene Emissionsgrade unterschiedlicher Materialien kann hierdurch entfallen. Andere Arten der Oberflächenbeschichtung insbesondere das Anstreichen der Unterseite 25 der ULD 20 mit schwarzer Farbe sind vorstellbar. Ebenfalls vorstellbar ist, dass eine Seitenwand und/oder die Decke der ULD 20 mit einer Oberflächenbeschichtung versehen wird. Dies ist insbesondere sinnvoll, wenn die Temperaturmessung an einer Seitenwand oder einer Decke der ULD 20 vorgenommen wird.

In Fig. 1 umfasst jede Rollenantriebseinheit 3 eine Reflektionslichtschrankeneinheit 30, die einen Sender und Empfänger aufweist. Der Sender der Reflektionslichtschrankeneinheit 30 sendet ein Infrarotlichtsignal aus, das von der Unterseite 25 der ULD 20 reflektiert wird, falls sich die ULD oberhalb der jeweiligen Reflektionslichtschrankeneinheit 30 bzw. Rollenantriebseinheit 3 befindet. Das reflektierte Infrarotlicht wird vom Empfänger der Reflektionslichtschrankeneinheit 30 empfangen. Falls sich keine ULD 20 über der Rollenantriebseinheit 3 befindet, wird das Infrarotlicht nicht reflektiert. Auf diese Weise wird die An- oder Abwesenheit einer ULD 20 über der entsprechenden Rollenantriebseinheit 3 festgestellt. Diese Feststellung kann zum Steuern der Rollenantriebseinheit 3 bzw. Rollenantriebseinheiten 3 verwendet werden.

Die Temperaturmessvorrichtung 10 kann neben der Messung der Temperatur der ULD 20 zusätzlich dazu ausgebildet sein, die An- bzw. Abwesenheit einer ULD 20 über der Rollenantriebseinheit 3 festzustellen. Hierzu sendet die Temperaturmessvorrichtung 10 ein Ausgangssignal aus, das von der ULD 20 reflektiert wird. Dies kann kontinuierlich oder in Zeitintervallen geschehen. Somit kann die Rollenantriebseinheit 3 statt zweier Vorrichtungen, einer Temperaturmessvorrichtung 10 zum Messen der Temperatur der ULD 20 und einer Reflektionslichtschrankeneinheit 30 zum Feststellen der An- oder Abwesenheit der ULD 20, nur eine solche Temperaturmessvorrichtung 10 aufweisen, die beide Funktionen erfüllt. Hierdurch sinken die Kosten und der technische Aufwand.

### Bezugszeichenliste:

- 1: Frachtdeck
- 3: Rollenantriebseinheit (PDU)
- 5: Rollen der Rollenantriebseinheit (PDU)
- 10: Temperaturmessvorrichtung
- 20: ULD (Unit Load Device)
- 25: Unterseite der ULD (Unit Load Device)
- 30: Reflektionslichtschrankeneinheit

## Patentansprüche

1. Frachtdeck (1) für einen Frachtraum eines Flugzeugs umfassend mindestens eine Temperaturmessvorrichtung (10) zum berührungslosen Messen der Temperatur mindestens eines Containers, einer Palette oder eines dergleichen Unit Load Device (ULD) (20) sowie mindestens eine Rollenantriebseinheit (PDU) (3) zum Bewegen der ULD (20),
wobei die Temperaturmessvorrichtung (10) zum Messen der Temperatur einer im Wesentlichen schwarzen Unterseite der ULD (20) angepasst ist,
wobei die Temperaturmessvorrichtung (10) auf einen Emissionsgrad des Materials der Unterseite (25) der ULD (20) kalibrierbar und/oder einstellbar ist, **dadurch gekennzeichnet, dass** die Temperaturmessvorrichtung (10) derart in einem Boden des Frachtdecks (1) angeordnet ist, dass die Temperatur einer Unterseite (25) der ULD (20) mittels der Temperaturmessvorrichtung (10) messbar ist und die Temperaturmessvorrichtung (10) in der Rollenantriebseinheit (3) angeordnet ist.

2. Frachtdeck (1) nach Anspruch 1, wobei
die Temperaturmessvorrichtung (10) einen Infrarotsensor umfasst.

3. Frachtdeck (1) nach Anspruch 1 oder 2, wobei
die Temperaturmessvorrichtung (10) eine Infrarotkamera umfasst.

4. Frachtdeck (1) nach einem der vorhergehenden Ansprüche, wobei die Temperaturmessvorrichtung (10) mit einem Datenbus, insbesondere einem CAN-Bus, des Frachtdecks (1), insbesondere des Frachtraumbodens, zum Übertragen von Wärmemesssignalen verbindbar ist.

5. Frachtdeck (1) nach einem der vorhergehenden Ansprüche, wobei die Temperaturmessvorrichtung (10) mit einer Betriebsleitzentrale verbindbar ist.

6. Frachtdeck (1) nach einem der vorhergehenden Ansprüche, wobei die Temperaturmessvorrichtung (10) derart ausgebildet ist, dass die An- oder Abwesenheit einer ULD (20) zu Steuerzwecken durch ein Ausgangssignal der Temperaturmessvorrichtung (10) feststellbar ist.

7. Verfahren zum Überwachen der Temperatur eines auf einem Frachtraumboden angeordneten Containers, einer Palette oder eines dergleichen Unit Load Device (ULD) (20), wobei
die Temperatur einer Unterseite (25) der ULD (20), vorzugsweise die Temperatur einer schwarzen Unterseite der ULD (20), mittels einer Temperaturmessvorrichtung (10) in einer Rollenantriebseinheit (3) zum Bewegen der ULD (20) des Frachtraumbodens berührungslos gemessen wird, wobei vor dem Messen der Temperatur auf eine Unterseite (25) der ULD (20) eine Oberflächenbeschichtung zur Erhöhung des Emissionsgrads aufgebracht wird,
und wobei vor der Temperaturmessung die Temperaturmessvorrichtung (10) auf einen Emissionsgrad des Materials der Unterseite (25) der ULD (20) kalibriert und/oder eingestellt wird.

8. Verfahren nach Anspruch 7, wobei
die Temperatur der ULD (20) mittels eines Infrarotsensors und/oder einer Infrarotkamera gemessen wird.

9. Verfahren nach Anspruch 7 oder 8, ferner folgende Schritte umfassend:
- Vergleichen der gemessenen Temperatur der ULD (20) mit einem voreingestellten Grenzwert, und
- Auslösen eines Alarms, wenn die gemessene Temperatur den voreingestellten Grenzwert übersteigt.

## Claims

1. Freight deck (1) for a freight area of an aircraft, comprising at least one temperature measuring device (10) for non-contact measurement of the temperature of at least one container, pallet or similar Unit Load Device (ULD) (20), as well as at least one roll drive unit (PDU) (3) for moving the ULD (20),
wherein the temperature measuring device (10) is adapted to measure the temperature of a substantially black bottom side of the ULD (20),
wherein the temperature measuring device (10) can be calibrated and/or adjusted to an emissivity of the material of the bottom side (25) of the ULD (20),
**characterized in that** the temperature measuring device (10) is positioned in a floor of the freight deck (1) such that the temperature of a bottom side (25) of the ULD (20) can be measured by means of the temperature measuring device (10), and the temperature measuring device (10) is positioned in the roll drive unit (3).

2. Freight deck (1) according to claim 1, wherein
the temperature measuring device (10) comprises an infrared sensor.

3. Freight deck (1) according to claim 1 or 2, wherein
the temperature measuring device (10) comprises an infrared camera.

4. Freight deck (1) according to any one of the preceding claims, wherein
the temperature measuring device (10) can be connected to a data bus, optionally a CAN bus, of the freight deck (1), optionally the freight area floor, for transmitting heat measurement signals.

5. Freight deck (1) according to any one of the preceding claims, wherein
the temperature measuring device (10) can be connected to a central control station.

6. Freight deck (1) according to any one of the preceding claims, wherein
the temperature measuring device (10) is configured such that the presence or absence of an ULD (20) can be identified by an output signal of the temperature measuring device (10) for control purposes.

7. Method for monitoring the temperature of a container, pallet or similar Unit Load Device (ULD) (20) positioned on a freight area floor, wherein
the temperature of a bottom side (25) of the ULD (20), preferably the temperature of a black bottom side of the ULD (20), is measured in a non-contact manner by means of a temperature measuring device (10) in a roll drive unit (3) for moving the ULD (20) of the freight area floor,
wherein, prior to measuring the temperature, a surface coating is applied to a bottom side (25) of the ULD (20) for increasing the emissivity,
and wherein, prior to the temperature measurement, the temperature measuring device (10) is calibrated and/or adjusted to an emissivity of the material of the bottom side (25) of the ULD (20).

8. Method according to claim 7, wherein
the temperature of the ULD (20) is measured by means of an infrared sensor and/or an infrared camera.

9. Method according to claim 7 or 8, further comprising the steps of:
- comparing the ULD's (20) measured temperature to a preset limit value, and
- triggering an alarm when the measured temperature exceeds the preset limit value.

## Revendications

1. Pont de chargement pour une soute à fret d'un avion, incluant au moins un dispositif de mesure de température (10) pour la mesure sans contact de la température d'au moins un conteneur, d'une palette ou d'un dispositif à charge unitaire (20) analogue, ainsi qu'au moins une unité d'entraînement à rouleau (3) pour déplacer les dispositifs à charge unitaire (20),
dans lequel le dispositif de mesure de température (10) est adapté pour la mesure de la température d'une face inférieure sensiblement noire des dispositifs à charge unitaire (20), et le dispositif de mesure de température (10) est susceptible d'être calibré et/ou ajusté à un degré d'émission du matériau de la face inférieure (25) des dispositifs à charge unitaire (20),
**caractérisé en ce que** le dispositif de mesure de température (10) est agencé dans un plancher du pont de chargement (1) de telle manière que la température d'une face inférieure (25) des dispositifs à charge unitaire (20) est susceptible d'être mesurée au moyen du dispositif de mesure de température, et le dispositif de mesure de température (10) est agencé dans l'unité d'entraînement à rouleau (3).

2. Pont de chargement (1) selon la revendication 1, dans lequel le dispositif de mesure de température (10) inclut un capteur à infrarouge.

3. Pont de chargement (1) selon la revendication 1 ou 2, dans lequel le dispositif de mesure de température (10) inclut une caméra à infrarouge.

4. Pont de chargement (1) selon l'une des revendications précédentes, dans lequel le dispositif de mesure de température (10) est susceptible d'être connecté à un bus de données, en particulier à un bus CAN, du pont de chargement (1), en particulier du plancher de la soute à fret, pour la transmission de signaux de mesure thermique.

5. Pont de chargement (1) selon l'une des revendications précédentes, dans lequel
le dispositif de mesure de température (10) est susceptible d'être connecté avec un poste central de pilotage de fonctionnement.

6. Pont de chargement (1) selon l'une des revendications précédentes, dans lequel
le dispositif de mesure de température (10) est réalisé de telle façon que la présence ou l'absence d'un dispositif à charge unitaire (20) peut être constatée à des fins de commande par un signal à la sortie du dispositif de mesure de température (10).

7. Procédé pour surveiller la température d'un conteneur, d'une palette ou d'un dispositif à charge unitaire analogue (20) agencé sur un plancher d'une soute à fret, dans lequel
on mesure sans contact la température d'une face inférieure (25) des dispositifs à charge unitaire (20), de préférence la température d'une face inférieure noire des dispositifs à charge unitaire (20), au moyen d'un dispositif de mesure de température (10) dans une unité d'entraînement à rouleau (3) destiné à déplacer les dispositifs à charge unitaire (20) du plancher de la soute à fret,
dans lequel, avant de mesurer la température on applique sur une face inférieure (25) des dispositifs à charge unitaire (20) un revêtement de surface pour augmenter le degré d'émission, et
dans lequel avant la mesure de température, le dispositif de mesure de température (10) est calibré et/ou ajusté à un degré d'émission du matériau de la face inférieure (25) des dispositifs à charge unitaire (20).

8. Procédé selon la revendication 7, dans lequel
la température des dispositifs à charge unitaire (20) est mesurée au moyen d'un capteur à infrarouge et/ou d'une caméra à infrarouge.

9. Procédé selon la revendication 7 ou 8, incluant en outre les étapes suivantes :
- on compare la température mesurée des dispositifs à charge unitaire (20) avec une valeur limite préétablie, et
- on déclenche une alarme quand la température mesurée dépasse la valeur limite préétablie.
